# EUROPÄISCHE PATENTANMELDUNG

(11) **EP 1 715 332 A2**
(43) Veröffentlichungstag der Anmeldung: **25.10.2006**
(21) Anmeldenummer: 06118823.1
(22) Anmeldetag: 28.10.2003
(51) Int. Cl.: G01N 25/48, G01K 7/02, H01L 35/00

(54) **Thermoanalytischer Sensor und Verfahren zu dessen Herstellung**

(62) Teilanmeldung aus: 03103996.9
(71) Anmelder: Mettler-Toledo AG, 8606 Greifensee (CH)
(72) Erfinder: Hütter, Thomas, 5432, Niederrohrdorf (CH); Danhamer, Bernd, 8166, Niederweningen (CH); Niedermann, Urs, 8608, Bubikon (CH)

(57) **Zusammenfassung**

Bei einem thermoanalytischen Sensor mit einem Substrat (1) und einer darauf an einer Messposition (3) ausgebildeten Thermoelementanordnung (5, 6, 7, 8, 9, 10) wird eine Steigerung der Empfindlichkeit durch die Materialwahl für das Substrat (1) und/oder eine besondere Geometrie der Thermoelementanordnung herbeigeführt. Ferner wird ein Verfahren zur Herstellung des erfindungsgemässen Sensors angegeben.

## Beschreibung

Die Erfindung bezieht sich auf einen thermoanalytischen Sensor mit einem Substrat, durch das ein Wärmestrom zwischen einer an das Substrat thermisch angekoppelten Wärmequelle und mindestens einer auf dem Sensor ausgebildeten Messposition leitbar ist, und mit einer auf einer im wesentlichen ebenen Oberfläche des Substrats ausgebildeten Thermoelementanordnung zur Lieferung eines thermoelektrischen Signals, sowie auf ein Verfahren zur Herstellung eines solchen Sensors.

Derartige thermoanalytische Sensoren werden dazu verwendet, physikalische und/oder chemische Eigenschaften einer Substanz, eines Substanzgemisches und/oder von Reaktionsgemischen, die einem kontrollierten Temperaturprogramm unterworfen werden, als Funktion der Temperatur oder der Zeit zu messen. Weithin bekannte Beispiele sind die Wärmestromdifferenzkalorimetrie und die Leistungskompensationsdifferenzkalorimetrie. In diesen beiden Fällen erfolgt die Analyse einer Probe relativ zu einer Referenzprobe, weswegen der Sensor in diesen Fällen zwei Messpositionen aufweist, deren eine der Erfassung der Probe und deren andere der Erfassung der Referenzprobe dient. Im erstgenannten Fall stellt das von der Thermoelementanordnung gelieferte thermoelektrische Signal ein Mass für den Unterschied zwischen den Wärmeflüssen zur Probe und zur Referenzprobe dar. Im zweitgenannten Fall wird das von der Thermoelementanordnung gelieferte thermoelektrische Signal dazu verwendet, die Wärmeströme zur Probe und zur Referenzprobe derart einzuregeln, dass die Temperaturdifferenz zwischen der Probe und der Vergleichsprobe auf Null geregelt wird.

Die thermoanalytischen Sensoren sollen nach Möglichkeit über den gesamten Temperaturbereich der Analyse eine möglichst hohe Empfindlichkeit aufweisen, also in Abhängigkeit vom Wärmestrom ein thermoelektrisches Signal möglichst hoher Spannung liefern. Dadurch wird ein gutes Signal-Rausch-Verhältnis erhalten. Daher sind bei bekannten thermoanalytischen Sensoren (DE 39 16 311 C2 und EP 0 990 893 A1) eine Reihe von Thermokontakten der Thermoelementanordnung derart zusammengeschaltet, dass sich die einzelnen Thermospannungen in dem thermoelektrischen Signal summieren. Die betreffenden Thermokontakte der Thermoelementanordnung sind dabei kreisförmig um das Zentrum der Messposition bzw. die Zentren der Messpositionen herum in einem möglichst kleinen gegenseitigen azimutalen Abstand angeordnet, so dass bei diesen bekannten Konfigurationen eine Erhöhung der Anzahl der Thermokontakte aus Platzgründen nicht mehr möglich ist.

Der Erfindung liegt die Aufgabe zugrunde, bei einem thermoanalytischen Sensor der eingangs genannten Art die Empfindlichkeit weiter zu erhöhen und ein Verfahren zur Herstellung eines derartigen Sensors anzugeben.

Gemäss einem ersten Aspekt der Erfindung wird die eingangs genannte Aufgabe bei einem thermoanalytischen Sensor mit einem Substrat, durch das ein Wärmestrom zwischen einer an das Substrat thermisch angekoppelten Wärmequelle und mindestens einer auf dem Sensor ausgebildeten Messposition leitbar ist, und mit einer auf einer im wesentlichen ebenen Oberfläche des Substrats ausgebildeten Thermoelementanordnung zur Lieferung eines thermoelektrischen Signals, die eine der Messposition zugeordnete Reihe von in einer Schaltungsanordnung miteinander verbundenen, aus zwei unterschiedlichen Thermoelementmaterialien zusammengesetzten Thermokontakten aufweist, erfindungsgemäss dadurch gelöst, dass die Thermokontakte in mindestens zwei übereinander angeordneten und jeweils durch eine Isolierschicht voneinander getrennten Ebenen angeordnet sind, in denen sich jeweils zur Bildung von Abschnitten der Schaltungsanordnung dienende Verbindungen der Thermokontakte erstrecken und entsprechende Enden der Abschnitte zur Bildung der Schaltungsanordnung durch Durchkontaktierung miteinander verbunden sind.

Bei dieser erfindungsgemässen Lösung wird also die gesamte Schaltungsanordnung in mindestens zwei Abschnitte aufgeteilt. Durch die Übereinanderanordnung der den einzelnen Abschnitten angehörenden Thermokontakte wird der auf dem Sensor verfügbare Platz entsprechend der Anzahl der übereinander angeordneten Ebenen vielfach genutzt, wodurch die Schaltungsanordnung ein entsprechendes Vielfaches von Thermokontakten aufweisen kann. Dementsprechend kann das von der Schaltungsanordnung insgesamt zur Verfügung gestellte thermoelektrische Signal erhöht und dadurch die Empfindlichkeit gesteigert werden.

Zweckmässigerweise wird dieser Erfindungsgedanke derart ausgeführt, dass in der in Bezug auf das Substrat obersten Ebene Anschlüsse, an denen das von der Thermoelementanordnung gelieferte thermoelektrische Signal abgreifbar ist, ausgebildet sind und ein Ende des in der in Bezug auf das Substrat untersten Ebene angeordneten Abschnittes der Schaltungsanordnung durch Durchkontaktierung mit einem der Anschlüsse verbunden ist. Die Möglichkeit, das thermoelektrische Signal an den auf der obersten Ebene angebrachten Anschlüssen abgreifen zu können, erleichtert den Einbau und Anschluss des Sensors in ein zur Thermoanalyse dienendes Gesamtgerät.

Eine vorteilhafte Ausgestaltung besteht darin, die Thermokontakte eines Abschnitts der Schaltungsanordnung hintereinander zu schalten und die Abschnitte in Serie zur Schaltungsanordnung zusammenzuschalten, so dass eine Thermosäule entsteht.

Bevorzugt werden die Thermokontakte so angeordnet, dass sie das Zentrum der Messpositionen azimutal umgeben und abwechselnd in unterschiedlichen radialen Abständen zum Zentrum liegen.

Eine weitere vorteilhafte Ausgestaltung besteht darin, die in den verschiedenen Ebenen angeordneten Abschnitte der Schaltungsanordnung im Wesentlichen deckungsgleich auszubilden.

Im Rahmen der Erfindung ist insbesondere vorgesehen, dass die auf dem Substrat ausgebildeten Thermoelementanordnungen als Dickfilme ausgebildet sind. Die Anwendung der Dickfilmtechnik für die Herstellung der Thermoelementanordnungen auf dem Substrat ist in dem eingangs genannten deutschen Patent DE 39 16 311 C2 und der zugrundeliegenden deutschen Offenlegungsschrift DE 39 16 311 A1 unter Darstellung der dadurch erreichten Vorteile näher erläutert. Insbesondere löst die Dickfilmtechnik auf einfache Weise auch die Isolierung der einzelnen Strukturelemente der Thermoelementanordnungen nach aussen, d. h. gegenüber Probentiegeln oder Referenzprobentiegeln, die auf die Messpositionen aufgesetzt werden.

Hinsichtlich der erwünschten thermischen Inertheit und Beständigkeit des Sensors ist es von Vorteil, dass das Substrat ein keramisches Material ist.

In einem zweiten Aspekt der Erfindung zeichnet sich der thermoanalytische Sensor mit einem Substrat, durch das ein Wärmestrom zwischen einer an das Substrat thermisch angekoppelten Wärmequelle und mindestens einer auf dem Sensor ausgebildeten Messposition leitbar ist, und mit einer auf einer im wesentlichen ebenen Oberfläche des Substrats ausgebildeten Thermoelementanordnung zur Lieferung eines thermoelektrischen Signals, die eine der Messposition zugeordnete Reihe von in einer Schaltungsanordnung miteinander verbundenen, aus zwei unterschiedlichen Thermoelementmaterialien zusammengesetzten Thermokontakten aufweist, erfindungsgemäss dadurch aus, dass die Wärmeleitfähigkeit des Substrats nicht grösser als 5 Watt pro Meter und Kelvin ist.

Diese gegenüber herkömmlichen Alox-Substraten niedrigere Wärmeleitfähigkeit führt dazu, dass sich zwischen den auf unterschiedlichem Temperaturniveau befindlichen Thermokontakten ein höherer Temperaturgradient einstellt. Daraus ergibt sich eine entsprechende Erhöhung des von der Thermoelementanordnung gelieferten thermoelektrischen Signals mit der Folge, dass sich die Empfindlichkeit des Sensors und sein Signal-Rausch-Verhältnis erhöht. Allerdings vergrössert sich mit der Erniedrigung der Wärmeleitfähigkeit des Substrats die Zeitkonstante des Sensors. Selbst wenn der Erniedrigung der Wärmeleitfähigkeit keine materialtechnischen Grenzen gesetzt wären, sollte daher eine Untergrenze nicht unterschritten werden, bei der gerade noch eine befriedigende Zeitkonstante erzielt wird. In dieser Hinsicht sind für die praktische Anwendung Wärmeleitfähigkeiten von Interesse, deren Wert 0,5 W/(m*K) nicht unterschreitet.

Vorzugsweise ist vorgesehen, dass die Wärmeleitfähigkeit nicht grösser als 3 W/(m*K), noch vorteilhafter nicht grösser als 2 W/(m*K) ist. Hierdurch werden besonders spürbare Verbesserungen gegenüber herkömmlichen Alox-Substraten erhalten.

In einem dritten Aspekt der Erfindung zeichnet sich der thermoanalytische Sensor mit einem Substrat, durch das ein Wärmestrom zwischen einer an das Substrat thermisch angekoppelten Wärmequelle und mindestens einer auf dem Sensor ausgebildeten Messposition leitbar ist, und mit einer auf einer im wesentlichen ebenen Oberfläche des Substrats ausgebildeten Thermoelementanordnung zur Lieferung eines thermoelektrischen Signals, die eine Reihe von zu einer Thermosäule hintereinander geschalteten, aus zwei unterschiedlichen Thermoelementmaterialien zusammengesetzten Thermokontakten, die das Zentrum der Messposition azimutal umgeben und abwechselnd in unterschiedlichen radialen Abständen zum Zentrum der Messposition angeordnet sind, aufweist, erfindungsgemäss dadurch aus, dass in mindestens einem zwischen einem dem Zentrum radial nächstgelegenen ersten Thermokontakt und zwei dazu in der Reihe unmittelbar benachbarten zweiten Thermokontakten azimutal begrenzten Zwischenbereich der Oberfläche ein dritter Thermokontakt und ein in der Reihe dazu unmittelbar benachbarter vierter Thermokontakt vorgesehen sind.

Bei der durch diese Hintereinanderschaltung der Reihe von Thermokontakten gebildeten Thermosäule besteht somit zwischen je zwei in der Reihe unmittelbar benachbarten Thermokontakten ein radialer Abstand. Ein zum Zentrum der Messposition hin fliessender oder vom Zentrum der Messposition abfliessender Wärmestrom bewirkt daher infolge des Wärmewiderstandes des Sensors eine Temperaturdifferenz zwischen den jeweils in der Reihe unmittelbar benachbarten Thermokontakten, wodurch zwischen diesen Thermokontakten Thermospannungen entstehen, die sich infolge der Hintereinanderschaltung aufsummieren. Das gesamte thermoelektrische Signal stellt daher eine Summe aus den zwischen den in der Reihe unmittelbar benachbarten ersten und zweiten Thermokontakten auftretenden Thermospannungen sowie den zwischen den in der Reihe unmittelbar benachbarten dritten und vierten Thermokontakten auftretenden Thermospannungen dar. Die beiden Thermoelementmaterialien können für alle Thermokontakte dieselben sein. Offensichtlich ist es aber auch möglich, für die Ausbildung der Thermokontakte statt eines einzigen Paares von Thermomaterialien eine Anzahl unterschiedlicher Paare von Thermomaterialien zu verwenden. Da jedes Paar in der Reihe unmittelbar benachbarter dritter und vierter Thermokontakte in dem freien Zwischenbereich angeordnet ist, der jeweils zwischen einem der ersten Thermokontakte und den beiden dazu in der Reihe unmittelbar benachbarten zweiten Thermokontakten azimutal begrenzt ist, wird der auf dem Sensor zur Verfügung stehende Platz bestmöglich zur Erhöhung der Gesamtzahl der Thermokontakte ausgenutzt. Dabei können die dritten Thermokontakte radial verhältnismässig nahe bei den dem Zentrum radial nächstgelegenen ersten Thermokontakten angeordnet sein, während die vierten Thermokontakte radial verhältnismässig nahe bei den zweiten Thermokontakten angeordnet sein können. Ein zur Aufnahme einer zu analysierenden Probe dienender Tiegel kann derart dimensioniert sein, dass er an der Messposition mit seiner Grundfläche die ersten und dritten Thermokontakte überdeckt, während die radial weiter aussen liegenden zweiten und vierten Thermokontakte freiliegen. Auf diese Weise erfasst die Thermoelementanordnung besonders wirkungsvoll einen in der Umgebung des Tiegels auftretenden radialen Temperaturgradienten, welcher dem zwischen der Wärmequelle und dem Tiegel ausgetauschten Wärmestrom entspricht.

Eine besonders vorteilhafte Ausführungsform ist derart gestaltet, dass die ersten Thermokontakte auf einem das Zentrum als Mittelpunkt umgebenden ersten Kreis, die zweiten Thermokontakte auf einem zu dem ersten Kreis konzentrischen zweiten Kreis, dessen Radius grösser ist als der Radius des ersten Kreises, die dritten Thermokontakte auf einem zu dem ersten Kreis konzentrischen dritten Kreis, dessen Radius grösser als der Radius des ersten Kreises und kleiner als der Radius des zweiten Kreises ist, und die vierten Thermokontakte auf einem zu dem ersten Kreis konzentrischen vierten Kreis, dessen Radius grösser als der Radius des dritten Kreises ist, liegen. Diese Ausführungsform berücksichtigt das Erfordernis der Radialsymmetrie der Messstelle bzw. der Messstellen in Bezug auf das Zentrum und die dieser Symmetrieanforderung entsprechende übliche radialsymmetrische Ausbildung der Probentiegel. Deren kreisförmige Grundfläche wird dabei derart bemessen, dass ihr Radius grösser ist als der Radius des dritten Kreises, aber kleiner als der Radius des zweiten Kreises.

Der Annäherung an eine möglichst vollständige Radialsymmetrie ist es ferner dienlich, dass die Thermokontakte auf den jeweiligen Kreisen jeweils unter dem gleichen Winkelabstand angeordnet sind. Ebenso ist es im Sinne einer möglichst vollständigen Radialsymmetrie nützlich, dass sich das Thermoelementmaterial zwischen den in der Reihe jeweils unmittelbar benachbarten ersten und zweiten Thermokontakten in der Form gerader Streifen erstreckt und dass sich das Thermoelementmaterial zwischen innerhalb des selben Zwischenbereichs gelegenen, in der Reihe jeweils unmittelbar benachbarten dritten und vierten Thermokontakten in der Form gerader Streifen erstreckt. Die gesamte Thermoelementanordnung hat in diesen Fällen das Erscheinungsbild eines Doppelsterns, bei dem zwei auf das Zentrum der Messposition zentrierte Einzelsterne ineinander geschachtelt sind. Die dadurch erzielte gute Platzausnützung ermöglicht eine besonders grosse Anzahl von Thermokontakten und eine entsprechend hohe Empfindlichkeit des Sensors. Ein weiterer Vorteil dieser Anordnung besteht darin, dass sie sich durch Hinzufügen weiterer verschachtelter Sterne erweitern lässt, so lange der Radius des Kreises der innen liegenden Thermokontakte des äussersten Sterns kleiner ist als der Radius des Kreises der aussen liegenden Thermokontakte des innersten Sterns.

Im Sinne der Radialsymmetrie ist es ferner zweckmässig, dass sich das Thermoelementmaterial zwischen in unterschiedlichen Zwischenbereichen gelegenen, in der Reihe jeweils unmittelbar benachbarten dritten und vierten Thermokontakten mit einem streifenförmigen azimutalen Abschnitt erstreckt. Dieser azimutale Abschnitt kann die Form eines Kreisbogens annehmen, dessen auf das Zentrum der Messposition bezogener Radius etwas grösser ist als der auf das Zentrum bezogene radiale Abstand des zwischen den beiden jeweiligen Zwischenbereichen gelegenen zweiten Thermokontakts. Dabei kann ein Endbereich des Kreisbogens mit dem jeweils anderen Thermoelementmaterial unmittelbar den vierten Thermokontakt in dem einen Zwischenbereich bilden. Von dem dazu entgegengesetzten Endbereich des azimutalen Abschnitts kann sich ein radialer Abschnitt zu dem in dem anderen Zwischenbereich gelegenen dritten Thermokontakt erstrecken.

Für den Anschluss des erfindungsgemässen thermoanalytischen Sensors an eine Auswerteschaltung ist es zweckmässig, dass auf der Oberfläche des Substrats mit den beiden Enden der Thermosäule verbundene Anschlüsse, an denen das von der Thermosäule gelieferte thermoelektrische Signal abgreifbar ist, ausgebildet sind. Diese Anschlüsse können beispielsweise in der Form von flächigen Anschlusspads bzw. Anschlussflecken ausgebildet sein, an denen zu der Auswerteschaltung führende Verbindungsdrähte angeschlossen werden können.

Im Rahmen der Erfindung ist insbesondere vorgesehen, dass auf dem Sensor mehr als eine der Messpositionen ausgebildet sind. Insbesondere kann dabei eine der Messpositionen als Referenzposition dienen, während die übrigen Messpositionen zur Aufnahme von Proben dienen. Die Referenzposition kann entweder leer bleiben oder mit einer bekannten, inerten Referenzprobe versehen werden. Zur Durchführung einer Differenzkalorimetrie können die von den einzelnen Messpositionen gelieferten thermoelektrischen Signale derart zusammengeschaltet werden, dass jeweils die Differenzsignale zwischen der Referenzposition und den Probenpositionen erhalten werden.

Eine wichtige Ausführungsform zeichnet sich dadurch aus, dass auf dem Sensor zwei der Messpositionen ausgebildet sind. Hierbei kann die eine Messposition als Referenzposition und die andere Messposition als Probenposition dienen. Diese Ausgestaltung entspricht den dem Fachmann geläufigen Anordnungen zur Durchführung der Wärmestromdifferenzkalorimetrie.

Bei einer vorteilhaften alternativen Ausführungsform ist vorgesehen, dass auf dem Sensor vier der Messpositionen ausgebildet sind, von denen die Verbindungsgerade der Zentren eines Paares der Messpositionen die Mittelsenkrechte zur Verbindungsgeraden der Zentren des anderen Paares der Messpositionen bildet und umgekehrt. In diesem Fall liegen die Zentren der vier Messpositionen auf den Eckpunkten eines gedachten Quadrats. Diese Anordnung ist hinsichtlich einer möglichst hohen thermischen Symmetrie aller Messpositionen vorteilhaft.

In den bisher erörterten Ausführungsformen dient die Thermoelementanordnung des Sensors zur Erfassung eines zwischen der Messstelle und der Wärmequelle fliessenden Wärmestroms oder einer Differenz von verschiedenen Messstellen zugeordneten Wärmeströmen. Darüber hinaus sind für die Thermoanalyse Ausführungsformen der Erfindung von Vorteil, bei denen vorgesehen ist, dass auf der Oberfläche des Substrats an der Messposition eine weitere Thermoelementanordnung zur Lieferung eines einer Absoluttemperatur an der Messposition entsprechenden thermoelektrischen Signals sowie Anschlüsse, an denen das der Absoluttemperatur entsprechende thermoelektrische Signal abgreifbar ist, ausgebildet sind. Bekanntlich kann mit einem Thermoelement nur eine Temperaturdifferenz direkt gemessen werden. Für die Absoluttemperatur muss die Temperatur der einen Messstelle bekannt sein oder konstant gehalten werden. Dies geschieht nach der Stand der Technik ausserhalb des Sensors. Die hierdurch erhaltene Information über die Absoluttemperatur einer Messstelle kann beispielsweise dazu benutzt werden, bei Sensoren mit mehreren Messstellen thermische Symmetrieabweichungen rechnerisch zu korrigieren, die durch eine blosse Temperaturdifferenzmessung zwischen den Messstellen nicht erfasst werden und deren Nichterfassung einen Auswertefehler zur Folge hat, weil durch die Unsymmetrie die Temperaturdifferenz nicht genau der Differenz zwischen den Wärmeströmen der verschiedenen Messpositionen entspricht.

Eine zweckmässige Ausgestaltung besteht darin, dass die zur Lieferung des der Absoluttemperatur entsprechenden thermoelektrischen Signals dienende Thermoelementanordnung einen von den die Messposition umgebenden Thermokontakten umgrenzten Bereich eines ersten Thermoelementmaterials aufweist, von dem aus sich ein Verbindungsbereich zu einem der auf der Oberfläche ausgebildeten Anschlüsse erstreckt. Hierbei ist die der Erfassung der Absoluttemperatur dienende weitere Thermoelementanordnung um das Zentrum der Messposition herum konzentriert und steht dadurch mit der Messposition bzw. einer dort angebrachten Probe in unmittelbarem Temperaturkontakt. Im Sinne einer möglichst vollständigen radialen Symmetrie ist zweckmässigerweise vorgesehen, dass der umgrenzte Bereich des ersten Thermoelementmaterials kreisringförmig ausgebildet ist.

Die Ausbildung und Abgreifbarkeit des der Absoluttemperatur entsprechenden thermoelektrischen Signals wird zweckmässigerweise dadurch bewerkstelligt, dass auf dem umgrenzten Bereich des ersten Thermoelementmaterials ein Thermokontakt mit einem davon verschiedenen zweiten Thermoelementmaterial ausgebildet ist, das sich zu einem der auf der Oberfläche ausgebildeten Anschlüsse erstreckt.

Eine Vereinfachung und besonders gute Ausnutzung der Platzverhältnisse auf dem Sensor wird in einer zweckmässigen Ausgestaltung dadurch erreicht, dass auf dem Sensor zwei der Messpositionen ausgebildet sind und auf dem Substrat eine Verbindung zwischen den zweiten Thermoelementmaterialien der beiden Messpositionen ausgebildet und zu einem gemeinsamen Anschluss geführt ist. Zwischen diesem gemeinsamen Anschluss und den beiden mit dem ersten Thermoelementmaterial verbundenen Anschlüssen der beiden Messpositionen lässt sich jeweils das der Absoluttemperatur dieser Messpositionen entsprechende thermoelektrische Signal abgreifen.

In einer weiteren zweckmässigen Ausführungsform dient es einer Minimierung der auf dem Substrat anzubringenden Anschlussstruktur, dass auf dem Sensor zwei der Messpositionen ausgebildet sind und auf dem Substrat eine Verbindung zwischen zwei elektrisch äquivalenten Enden der den beiden Messpositionen zugeordneten Thermosäulen ausgebildet ist und die beiden anderen Enden der Thermosäulen jeweils mit zum Abgriff der Differenz zwischen den von den beiden Thermosäulen gelieferten thermoelektrischen Signalen dienenden, auf dem Substrat ausgebildeten Anschlüssen verbunden sind. Bei dieser Ausgestaltung sind die beiden Thermosäulen elektrisch gegeneinander geschaltet, so dass an den beiden Anschlüssen das der Differenz der Temperaturen an den beiden Messpositionen entsprechende thermoelektrische Signal auftritt.

Zusätzlich kann es für die Auswertung und Korrekturberechnung wünschenswert sein, die näherungsweise den einzelnen Wärmeströmen entsprechenden Ausgangssignale der beiden Thermosäulen getrennt abgreifen zu können. Für eine Minimierung der hierfür erforderlichen Anschlussstruktur auf dem Substrat ist es vorteilhaft, dass die Verbindung mit einem auf dem Substrat ausgebildeten gemeinsamen Anschluss verbunden ist. Zwischen diesem gemeinsamen Anschluss und den zu ihren betreffenden Anschlüssen geführten Enden der beiden Thermosäulen kann somit jeweils getrennt das Ausgangssignal beider Thermosäulen abgegriffen werden.

Eine zweckmässige Ausgestaltung besteht darin, dass für das Substrat ein besonderes Keramikmaterial gewählt wird, das eine tiefere Leitfähigkeit als die herkömmlichen Oxidkeramiken, aber vergleichbar günstige mechanischelektrische Eigenschaften aufweist. Geeignet ist zum Beispiel das unter dem Produktnamen PYTHAGORAS erhältliche Substratmaterial, mit einer Wärmeleitfähigkeit im Bereich um 2 W/(m*K). Weiter geeignet, wenn auch mechanisch weniger günstig, ist das unter dem Produktnamen MACOR erhältliche Glaskeramiksubstrat mit einer Wärmeleitfähigkeit von deutlich weniger als 2 W/(m*K).

Gemäss einem vierten Aspekt der Erfindung zeichnet sich ein Verfahren zur Herstellung eines thermoanalytischen Sensors, bei dem auf einer im wesentlichen ebenen Oberfläche eines Substrats in Dickschichttechnik ein Muster aus mindestens zwei unterschiedlichen Thermoelementmaterialpasten aufgedruckt wird, welches einer zur Lieferung eines thermoelektrischen Signals dienenden Thermoelementanordnung mit einer mindestens einer Messposition zugeordneten Reihe von in einer Schaltungsanordnung miteinander verbundenen, aus den zwei unterschiedlichen Thermoelementmaterialien zusammengesetzten Thermokontakten entspricht, und das aufgedruckte Muster aufgebrannt wird, erfindungsgemäss dadurch aus, dass man das Muster in mindestens zwei Teilmuster zerlegt, auf dem Substrat eines der Teilmuster in Dickschichttechnik herstellt, darüber eine Isolierschicht mit dem Zusammenhang der Teilmuster entsprechenden Durchkontaktierungslöchern aufbringt, darauf ein weiteres der Teilmuster in Dickschichttechnik herstellt und diesen Vorgang so lange durchführt, bis alle Teilmuster übereinander hergestellt sind.

Mit der Dickschichttechnik lässt sich die aus den Teilmustern und Isolierschichten bestehende Struktur auf dem Substrat mit verhältnismässig kleinem Aufwand herstellen. Als Thermoelementmaterialien können herkömmliche Pasten, beispielsweise Goldpaste für das eine Thermoelementmaterial und Gold/Palladiumpaste für das andere Thermoelementmaterial, verwendet werden. Gewünschtenfalls können weitere Materialien verwendet werden, um Thermokontakte mit unterschiedlichen Eigenschaften herzustellen. Diese Pasten können in bekannter Weise durch Siebdruckverfahren entsprechend den vorgesehenen Mustern aufgebracht werden. Nach jedem Aufbringungsvorgang wird jeweils der Brennvorgang ausgeführt. Insbesondere kann dabei für jedes Teilmuster zunächst das eine Thermoelementmaterial aufgebracht und gebrannt sowie anschliessend das andere Thermoelementmaterial entsprechend dem Teilmuster aufgebracht und gebrannt wird. Die getrennte Durchführung dieser beiden Brennvorgänge begünstigt die thermoelektrische Leistungsfähigkeit der solchermassen gebildeten Thermokontakte.

Vorteilhafte Ausgestaltungen des Verfahrens bestehen darin, die Teilmuster so zu gestalten, dass durch das wiederholte Durchführen des schichtweisen Aufbringens derselben unmittelbar die thermoanalytischen Sensoren mit den bevorzugten Schaltungsanordnungen entstehen. Eine erste solche Ausgestaltung besteht darin, die Teilmuster im Wesentlichen deckungsgleich auszuführen. Eine weitere Ausgestaltung besteht darin, die Teilmuster nur durch je eine Verbindung hintereinander zu schalten, wodurch die Zahl der Durchkontaktierungen klein gehalten werden kann. Eine weitere Ausgestaltung besteht darin, dass auf dem in Bezug auf das Substrat obersten Teilmuster eine Isolierschicht mit Anschlüssen, an denen das thermoelektrische Signal abgreifbar ist, hergestellt wird, von denen mindestens einer zu dem in Bezug auf das Substrat untersten Teilmuster durchkontaktiert wird.

In der folgenden Beschreibung ist die Erfindung anhand von Ausführungsbeispielen unter Bezugnahme auf die Zeichnungen näher erläutert. Die Zeichnungen zeigen:
- Fig. 1: eine schematische Aufsicht auf eine erste Ausführungsform eines erfindungsgemässen thermoanalytischen Sensors im Bereich einer Messstelle;
- Fig. 2: eine schematische Aufsicht auf eine zweite Ausführungsform eines erfindungsgemässen thermoanalytischen Sensors mit zwei Messstellen;
- Fig. 3: eine Explosionsdarstellung einer dritten Ausführungsform eines erfindungsgemässen thermoanalytischen Sensors;
- Fig. 4: eine schematische Aufsicht auf eine vierte Ausführungsform eines erfindungsgemässen thermoanalytischen Sensors, und
- Fig. 5: eine Explosionsdarstellung einer fünften Ausführungsform eines erfindungsgemässen thermoanalytischen Sensors.

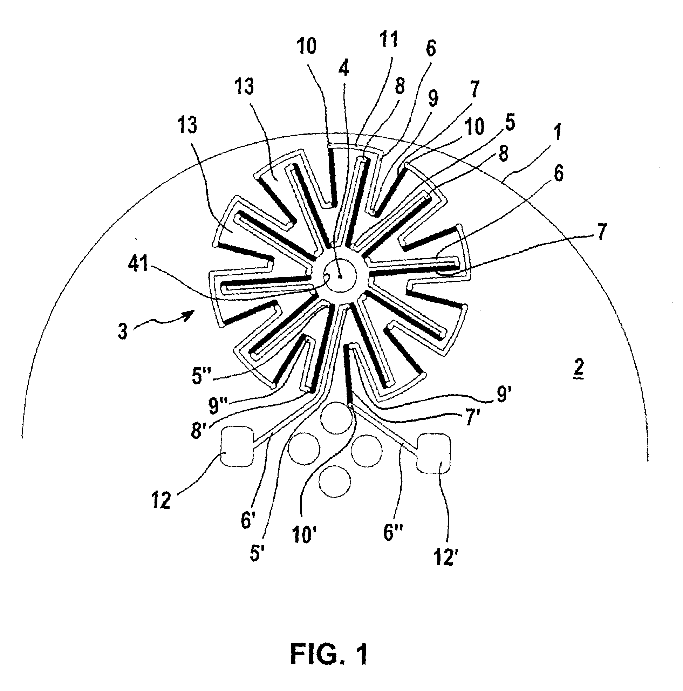

Eine erste Ausführungsform eines erfindungsgemässen thermoanalytischen Sensors weist ein zylindrisches Substrat 1 mit einer im Verhältnis zum Zylinderradius kleinen Zylinderhöhe auf. Fig. 1 zeigt eine in der Richtung der Zylinderachse des Substrats 1 gesehene schematische Aufsicht auf eine kreisscheibenförmige Oberfläche 2 des Substrats. In einem zwischen der Zylinderachse und ihrem radial äusseren Rand begrenzten Bereich der Oberfläche 2 ist eine Messposition 3 ausgebildet, die mit einer in Dickfilmtechnik aufgebrachten Thermoelementanordnung versehen ist.

In dieser Thermoelementanordnung überlappen sich jeweils die Enden streifenförmiger Bereiche zweier unterschiedlicher Thermoelementmaterialien und bilden durch diese Überlappung eine Reihe von Thermokontakten. Diese Thermokontakte sind auf vier konzentrischen Kreisen angeordnet, deren gemeinsamer Mittelpunkt 4 das Zentrum der Messposition 3 bildet. Die auf dem zentrumnächsten ersten Kreis gelegenen ersten Thermokontakte sind in Fig. 1 mit der Bezugsziffer 5 bezeichnet. Sie sind jeweils aus sich überlappenden, kurzen azimutalen Endbereichen der beiden unterschiedlichen Thermoelementmaterialien 6, 7 zusammengesetzt, von denen aus sich die Thermoelementmaterialien 6, 7 geringfügig voneinander beabstandet und parallel zueinander im wesentlichen radial in Bezug auf das Zentrum 4 bis zu dem zweiten Kreis nach aussen erstrecken, wo sie ebenso wie die ersten Thermokontakte 5 durch sich überlappende kurze azimutale Endbereiche die zweiten Thermokontakte 8 bilden.

Die dritten Thermokontakte 9 liegen auf dem dritten Kreis, dessen Radius grösser als der Radius des ersten Kreises und kleiner als der Radius des zweiten Kreises ist. Sie bestehen ähnlich wie die ersten Thermokontakte 5 aus kurzen azimutalen, sich überlappenden Endbereichen der beiden Thermoelementmaterialien 6, 7, von denen aus sich die beiden Thermoelementmaterialien 6, 7 im Wesentlichen radial streifenförmig nach aussen bis zu dem vierten Kreis erstrecken, dessen Radius grösser ist als der Radius des zweiten Kreises. Auf dem vierten Kreis liegen die Enden der Streifen des Thermoelementmaterials 7. Diese Enden bilden zusammen mit sie überlappenden Enden des Thermoelementmaterials 6, das sich von dort aus dem vierten Kreis folgend azimutal erstreckt, die vierten Thermokontakte 10. Diese azimutalen Streifen 11 des ersten Thermoelementmaterials 6 erstrecken sich jeweils von dem vierten Thermokontakt 10 bis zu dem im Wesentlichen radialen Streifen des Thermoelementmaterials 6, der von dem azimutal nächstbenachbarten dritten Thermokontakt 9 ausgeht. Die ersten, zweiten, dritten und vierten Thermokontakte 5, 8, 9 bzw. 10 sind auf ihren jeweiligen Kreisen azimutal unter dem gleichen Winkelabstand angeordnet.

Von der vollständig symmetrischen Ausgestaltung der ersten Thermokontakte 5 weicht einer der ersten Thermokontakte 5' dadurch ab, dass der von ihm im wesentlichen radial ausgehende Streifen des ersten Thermoelementmaterials 6' über den Radius des zweiten Kreises hinaus bis zu einem auf der Oberfläche 2 des Substrats 1 ausgebildeten Anschlussfleck 12 weitergeführt ist. Dieser erste Thermokontakt 5' bildet das eine Ende einer Thermosäule, in der alle Thermokontakte 5, 5', 8, 9 und 10 der Reihe nach hintereinander geschaltet sind. Das andere Ende dieser Thermosäule bildet der dem diesem ersten Thermokontakt 5' radial benachbarten dritten Thermokontakt 9' nach geschaltete vierte Thermokontakt 10'. Der von diesem dritten Thermokontakt 9' im wesentlichen radial nach aussen verlaufende Streifen des Thermoelementmaterials 7' ist an seinem auf dem vierten Kreis gelegenen äusseren Ende von einem Streifen des Thermoelementmaterials 6" kontaktiert und bildet mit diesem den vierten Thermokontakt 10'. Der Streifen des Thermomaterials 6" ist zu einem auf der Oberfläche 2 ausgebildeten weiteren Anschlussfleck 12' geführt.

Die Figurendarstellungen und ihre vorstehende Beschreibung verdeutlichen auch, dass die Thermoelementmaterialien 6, 7 bzw. 7' lediglich in den Bereichen, in denen sie sich gegenseitig überlappen und durch diesen Überlappungskontakt die Thermokontakte 5, 5', 8, 9, 10, 10' bilden, übereinander liegen. Im Übrigen erstrecken sich alle Thermoelementmaterialien 6, 7 bzw. 7' nebeneinander liegend in ein und derselben Ebene.

In der zu der Thermosäule hintereinander geschalteten Reihe, die bei dem ersten Thermokontakt 5' beginnt, sind also jeweils ein erster Thermokontakt 5 bzw. 5' und ein zweiter Thermokontakt 8 unmittelbar benachbart, bis nach einem im Gegenuhrzeigersinn erfolgenden azimutalen Umlauf um das Zentrum 4 der dem anfänglichen ersten Thermokontakt 5' azimutal nächstgelegene erste Thermokontakt 5" erreicht ist. Dem damit durch den sich im Wesentlichen radial erstreckenden Streifen des Thermoelementmaterials 7 verbundenen weiteren Thermokontakt 8' ist in der Reihe ein dritter Thermokontakt 9" unmittelbar benachbart, worauf jeweils unmittelbar benachbarte Paare vierter und dritter Thermokontakte 10 bzw. 9 folgen, bis der vierte Thermokontakt 10' erreicht ist, der das andere Ende der Thermosäule bildet. Die gesamte Thermoelementanordnung hat das Erscheinungsbild eines Doppelsterns. Die sich zwischen den ersten und zweiten Thermokontakten 5 bzw. 8 in Form geradliniger Streifen erstreckenden Thermoelementmaterialien 6, 7 bilden einen inneren Stern und begrenzen zwischen sich auf der Oberfläche 2 jeweils azimutale Zwischenbereiche 13, in denen jeweils die Paare in der Reihe unmittelbar benachbarter dritter und vierter Thermokontakte 9 bzw. 10 liegen und mit den davon ausgehenden Thermoelementmaterialien 6, 7 den äusseren Stern bilden. Die Anordnung liesse sich in gleicher Weise fortsetzen, indem beginnend beim Thermokontakt 10' ein weiterer azimutaler Umlauf im Gegenuhrzeigersinn gestartet würde.

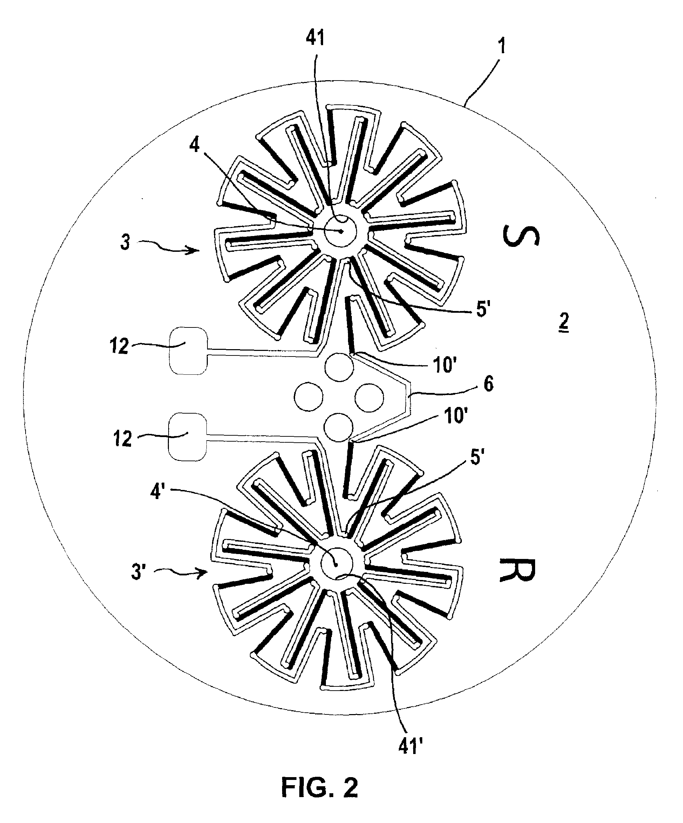

Eine zweite Ausführungsform des erfindungsgemässen thermoelektrischen Sensors ist in Fig. 2 in einer der Darstellung der ersten Ausführungsform in Fig. 1 entsprechenden Ansicht gezeigt. Bei dieser Ausführungsform sind zwei Messstellen 3 und 3' vorgesehen, deren jede in ihrer Struktur vollständig der anhand von Fig. 1 beschrieben und dargestellten Messposition 3 entspricht, weswegen auf die diesbezügliche Beschreibung verwiesen werden kann. Die beiden Messpositionen 3 und 3' der zweiten Ausführungsform sind in Bezug auf die Zylinderachse des Substrats 1 diametral zueinander unter gleichem Abstand angeordnet. In der Nähe der Messposition 3 ist auf der Oberfläche 2 die Bezeichnung "S" für "Sample" und in der Nähe der Messposition 3' die Bezeichnung "R" für "Reference" aufgedruckt. Dies weist auf die Verwendbarkeit der Messposition 3 für das Aufsetzen einer Probe und die Verwendbarkeit der Messposition 3' für das Aufsetzen einer inerten Referenzprobe hin.

Hinsichtlich Fig. 1 besteht eine Abweichung lediglich darin, dass das von dem vierten Thermokontakt 10'gebildete Ende der an der Messposition 3 ausgebildeten Thermosäule und ebenso das von dem vierten Thermokontakt 10' gebildete Ende der an der Messposition 3' ausgebildeten Thermosäule abweichend von Fig. 1 jeweils nicht zu einem Fig. 1 entsprechenden getrennten Anschluss 12' geführt ist. Stattdessen sind diese beiden Enden durch einen Streifen des Thermoelementmaterials 6 zusammengeschaltet. Die das andere Ende der Thermosäulen bildenden ersten Thermokontakte 5' beider Messpositionen 3 bzw. 3' sind wie in Fig. 1 jeweils zu einem Anschluss 12 geführt. Auf diese Weise sind die beiden Thermosäulen elektrisch gegeneinander geschaltet. An den beiden Anschlüssen 12 der zweiten Ausführungsform kann daher die Differenz der von den beiden Thermosäulen gelieferten thermoelektrischen Signale abgegriffen werden, während bei der ersten Ausführungsform an den Anschlüssen 12, 12' das gesamte von der an der Messposition 3 ausgebildeten Thermosäule gelieferte thermoelektrische Signal anliegt.

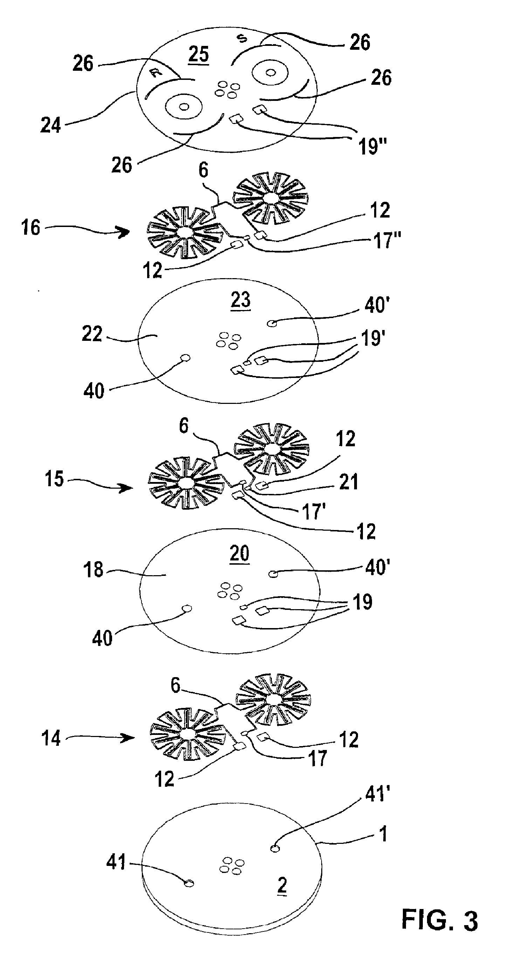

Bei einer dritten Ausführungsform des erfindungsgemässen thermoanalytischen Sensors ist das von den Thermomaterialien und Thermokontakten der Thermoelementanordnung gebildete Gesamtmuster in mehrere Teilmuster unterteilt, wobei diese Teilmuster übereinander angeordnet und entsprechende elektrische Enden dieser Teilmuster miteinander verbunden sind. Dies ist in Fig. 3 der Deutlichkeit halber in der Form einer Explosionsdarstellung wiedergegeben, in der die einzelnen Schichten dieser Übereinanderschichtung in der Richtung der Zylinderachse des mit der ersten und zweiten Ausführungsform von Fig. 1 und 2 übereinstimmenden Substrats 1 auseinander gezogen dargestellt sind. In Fig. 3 sind insgesamt drei derartige Teilmuster 14, 15 und 16 vorgesehen, deren jedes für sich dem bei der zweiten Ausführungsform vorgesehenen und in Fig. 2 dargestellten, die Thermoelementanordnung bildenden Muster entspricht. Geringfügige Abweichungen gegenüber dem in Fig. 2 dargestellten Muster bestehen lediglich insoweit, als sie zur Verbindung der elektrischen Enden der Teilmuster erforderlich sind.

Das in Fig. 3 unterste Teilmuster 14 ist, ebenso wie in Fig. 2, auf der Oberfläche 2 des Substrats angeordnet. Wie in Fig. 2 ist dabei das Thermoelementmaterial von dem ein Ende der dem Gesamtmuster entsprechenden gesamten Schaltungsanordnung bildenden ersten Thermokontakt 5' mit dem Anschlussfleck 12 verbunden. Dagegen ist der entsprechende endseitige erste Thermokontakt des in Fig. 2 bzw. Fig. 3 rechten Teils des Musters, der mit dem linken Teil mittels der Verbindung 6 aus Thermoelementmaterial zusammengeschaltet ist, mit einer Durchkontaktierungsstelle 17 verbunden, die sowohl von dem in Fig. 2 bzw. Fig. 3 linken Anschlussfleck 12 als auch einem dem in Fig. 2 rechten Anschlussfleck entsprechenden Anschlussfleck 12, der in Fig. 3 jedoch als nicht mit dem restlichen Teilmuster zusammenhängende Insel ausgebildet ist, beabstandet ist.

Auf dem auf der Oberfläche 2 angeordneten Teilmuster 14 befindet sich eine Isolierschicht 18, die deckungsgleich zu der Durchkontaktierungsstelle 17 und den beiden Anschlussflecken 12 mit Durchkontaktierungslöchern 19 versehen ist. Auf der dem Teilmuster 14 entgegengesetzten Oberfläche 20 der Isolierschicht 18 ist das Teilmuster 15 angeordnet. Das dem zum Anschluss 12 geführten Ende des untersten Teilmusters 14 entsprechende Ende des mittleren Teilmusters 15 ist mit einer Durchkontaktierungsstelle 17' verbunden, die durch das zu den Durchkontaktierungsstellen 17, 17' deckungsgleiche Durchkontaktierungsloch 19 mit der Durchkontaktierungsstelle 17 verbunden ist. Das Ende des in Fig. 3 rechten Teils des Teilmusters 15, welches dem zur Durchkontaktierungsstelle 17 geführten Ende des untersten Teilmusters 14 entspricht, ist zu einer von der Isolierschicht 18 nach unten hin abisolierten Durchkontaktierungsstelle 21 geführt. Die beiden untersten Anschlussflecken 12 sind durch die dazu deckungsgleichen Durchkontaktierungslöcher 19 hindurch zu der Oberfläche 20 der Isolierschicht 18 weitergeführt und bilden dort isolierte Inseln.

Auf der mit dem Teilmuster 15 versehenen Oberfläche 20 der Isolierschicht 18 ist eine Isolierschicht 22 angeordnet, die mit zu der Durchkontaktierungsstelle 21 und den beiden Anschlussflecken 12 deckungsgleichen Durchkontaktierungslöchern 19' versehen ist. Die Oberfläche 23 dieser Isolierschicht 22 trägt das in Fig. 3 oberste Teilmuster 16. Das Anschlussende des linken Teils ist mit einer Durchkontaktierungsstelle 17'' verbunden, die durch ein dazu deckungsgleiches Durchkontaktierungsloch 19' der Isolierschicht 22 hindurch mit der dazu deckungsgleich angeordneten Durchkontaktierungsstelle 17' des mittleren Teilmusters 15 verbunden ist. Das Anschlussende des rechten Teils ist mit dem in Fig. 3 rechten Anschlussflecken 12 verbunden, der durch dadurch deckungsgleiche Durchkontaktierungslöcher 19' bzw. 19 beider Isolierschichten 22 bzw. 18 vollständig durchkontaktiert ist. Der linke Anschlussfleck 12 steht über entsprechende Durchkontaktierungslöcher 19', 19 hindurch mit dem linken Anschlussfleck 12 des in Fig. 3 untersten Teilmusters 14 in Verbindung.

Auf der mit dem obersten Teilmuster 16 versehenen Oberfläche 23 der Isolierschicht 22 ist eine Isolierschicht 24 angeordnet, die lediglich zu den Anschlussflecken 12 deckungsgleiche Durchkontaktierungslöcher 19" aufweist. An den durch diese Durchkontaktierungslöcher 19" durchkontaktierten Anschlussflecken 12 ist das von der gesamten Schaltungsanordnung gelieferte thermoelektrische Signal abgreifbar. Es stellt die Summe der von den einzelnen Teilmustern 14, 15 und 16 gelieferten Thermospannungsdifferenzen zwischen dem jeweils linken und dem jeweils rechten Teil jedes Teilmusters dar.

Ausserdem sind auf der freiliegenden Oberfläche 25 der Isolierschicht 24 ausser den schon anhand von Fig. 2 erwähnten Hinweisen "R" und "S" bogenförmige Markierungen 26 vorgesehen, welche die Zentrierung von Proben- bzw. Referenztiegeln in Bezug auf die Zentren 4 bzw. 4' der betreffenden Messstellen (vgl. Fig. 2) erleichtern.

Die in Fig. 3 dargestellte dritte Ausführungsform wird insbesondere in Dickfilmtechnik hergestellt. Dabei wird zuerst auf der Oberfläche 2 des Substrats 1 das Teilmuster 14 im Siebdruckverfahren aus geeigneten Thermoelementmaterialpasten aufgedruckt und gebrannt. Vorzugsweise erfolgt dieser Vorgang in zwei Schritten, in deren erstem nur die aus dem einen Thermoelementmaterial bestehenden Strukturbestandteile aufgebracht und sogleich gebrannt werden. In dem zweiten Schritt werden dann die aus dem anderen Thermoelementmaterial bestehenden Strukturelemente aufgedruckt und der Brennvorgang wiederholt. Dieses zweistufige Vorgehen wirkt sich auf die Qualität der Thermokontakte günstig aus. Nach dem Aufbringen der Isolierschicht 18 wird auf dieselbe Weise das zweite Teilmuster 15 hergestellt und dieser gesamte Vorgang so lange wiederholt, bis alle Isolierschichten und Teilmuster fertig gestellt sind. Darauf wird die oberste Isolierschicht 24 angebracht.

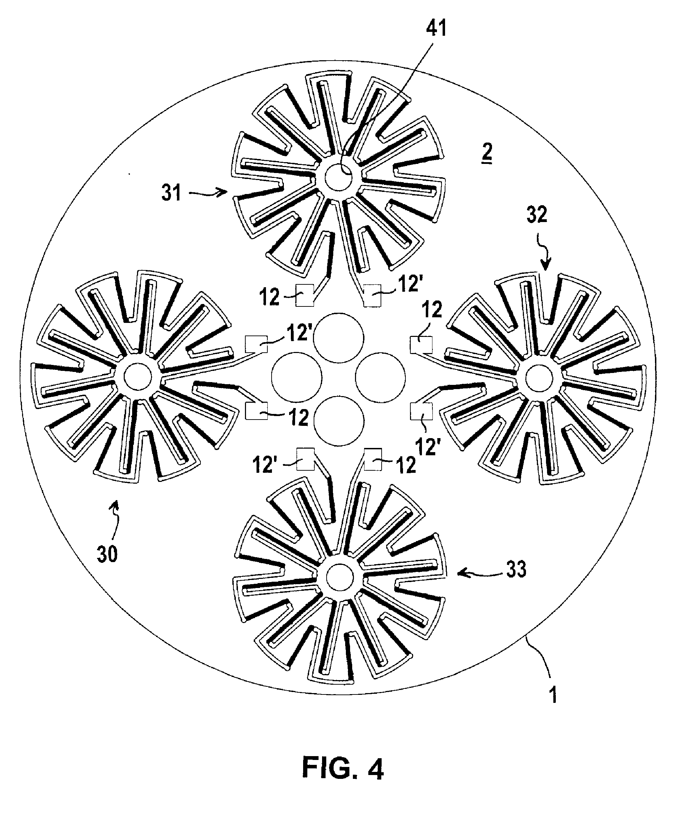

Eine vierte Ausführungsform des erfindungsgemässen thermoanalytischen Sensors, die in Fig. 4 in einer Fig. 1 entsprechenden Ansicht dargestellt ist, weist insgesamt vier Messpositionen 30, 31, 32 bzw. 33 auf, deren jede wie die in Fig. 1 dargestellte Messposition 3 gestaltet ist, weswegen insoweit auf die Beschreibung von Fig. 1 verwiesen wird. Insbesondere sind die Enden der einzelnen Thermosäulen wie in Fig. 1 jeweils mit einem Paar von Anschlussflecken 12, 12' verbunden, an denen die von der jeweiligen Thermosäule erzeugte thermoelektrische Spannung abgreifbar ist. Die Zentren der vier Messpositionen 30, 31, 32, 33 liegen auf den Eckpunkten eines Quadrats, dessen Diagonalen sich in der Zylinderachse des Substrats 1 schneiden.

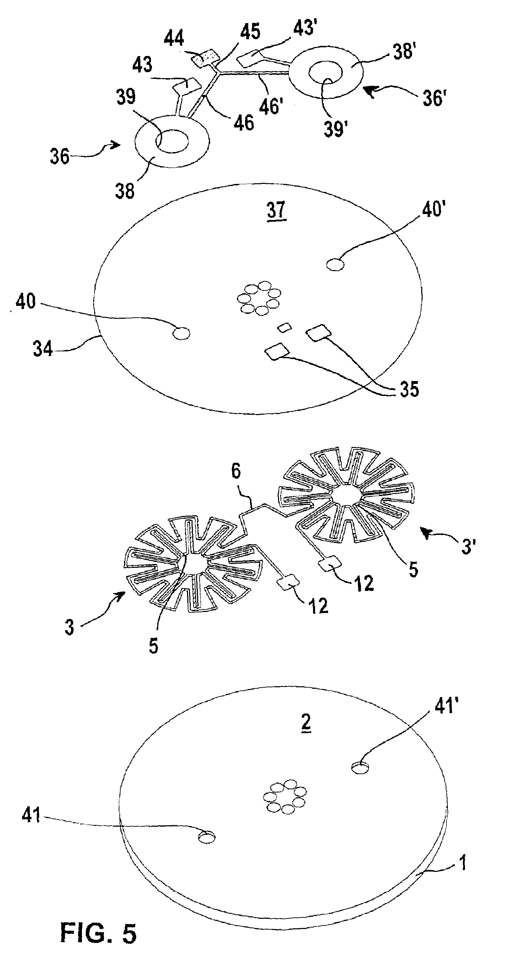

Eine fünfte Ausführungsform des erfindungsgemässen thermoanalytischen Sensors, die in Fig. 5 in einer in der Richtung der Zylinderachse des Substrats 1 auseinander gezogenen Explosionsdarstellung dargestellt ist, entspricht hinsichtlich der durch die Verbindung 6 und die beiden Anschlussflecken 12 gebildeten Differenzschaltung zwischen den beiden Doppelsternen vollständig der anhand von Fig. 2 erläuterten zweiten Ausführungsform, so dass insoweit auf deren Beschreibung verwiesen werden kann. Darüber hinaus zeigt Fig. 5 eine auch bei der zweiten Ausführungsform vorhandene, in Fig. 2 jedoch nicht dargestellte Isolierschicht 34, die zu den Anschlussflecken 12 der Thermoelementanordnung deckungsgleiche Fenster 35 aufweist, so dass dort das an den Anschlussflecken 12 anliegende thermoelektrische Differenzsignal abgreifbar ist. Die Isolierschicht 34 ermöglicht das Aufsetzen metallischer Tiegel, ohne dass es dadurch zu Kurzschlussbildungen zwischen den Thermokontakten kommt.

Zusätzlich zu diesen schon bei der zweiten Ausführungsform gemäss Fig. 2 vorgesehenen Elementen ist bei der fünften Ausführungsform an jeder der beiden Messpositionen 3 bzw. 3' eine weitere Thermoelementanordnung 36 bzw. 36' auf der freiliegenden Oberfläche 37 der Isolierschicht 34 ausgebildet. Jede dieser weiteren Thermoelementanordnungen 36, 36' weist ein ringförmiges erstes Thermoelementmaterial 38 bzw. 38' auf, das jeweils in zentrischer Anordnung relativ zum Zentrum 4 bzw. 4' der Messstellen 3 bzw. 3' ausgebildet ist. In Fig. 5 sind diese beiden weiteren Thermoelementanordnungen 36, 36' zur Verdeutlichung in einem grösseren Massstab dargestellt als die darunterliegenden Teile der Explosionsdarstellung. Tatsächlich ist das ringförmige erste Thermoelementmaterial 38 bzw. 38' jeweils innerhalb des ersten Kreises angeordnet, auf dem die ersten Thermokontakte 5 liegen. In dem durch den inneren Ringumfang 39 bzw. 39' umgrenzten Bereich weist die Isolierschicht 34 und das Substrat jeweils zueinander deckungsgleiche, axial durchgehende Ausnehmungen 40, 40' bzw.41, 41' auf. Derartige Ausnehmungen sind auch bei den übrigen bisher beschriebenen Ausführungsformen vorhanden und in den betreffenden Figuren mit entsprechenden Bezugszeichen bezeichnet.

Das ringförmige erste Thermoelementmaterial 38 bzw. 38' weist jeweils eine streifenförmige radiale Fortsetzung 42 bzw. 42' auf, die jeweils zu einem Anschlussfleck 43 bzw. 43' führt. Ferner ist auf der Mittelsenkrechten einer gedachten Verbindungslinie der beiden Zentren 4, 4' der Messpositionen 3 bzw. 3' ein gemeinsamer Anschlussfleck 44 zentriert, von dem aus sich längs dieser Mittelsenkrechten zwischen den beiden Anschlussflecken 43, 43' hindurch ein Verbindungsstück 45 bis zu einer Y-förmigen Verzweigung erstreckt, von wo aus sich das Verbindungsstück 45 in zwei streifenförmigen Armen 46, 46' spiegelsymmetrisch zur Mittelsenkrechten bis in die ringförmigen ersten Thermoelementmaterialien 38 bzw. 38' hinein erstreckt. Der Anschlussfleck 44, das Verbindungsstück 45 und dessen Arme 46, 46' bestehen aus einem zweiten Thermoelementmaterial, das mit dem ersten Thermoelementmaterial 38 bzw. 38' jeweils einen Thermokontakt bildet. Die an diesen beiden Thermokontakten auftretenden thermoelektrischen Signale sind zwischen dem Anschlussfleck 44 und den Anschlussflecken 43 bzw. 43' abgreifbar. Sie stellen je ein einer Absoluttemperatur an der Messposition 3 bzw. 3' entsprechendes Signal dar. Für die Ermittlung der absoluten Temperatur wird das Signal in bekannter Weise in einer geeigneten Schaltung weiter verarbeitet.

Bei allen vorstehend beschriebenen Ausführungsformen wird der Sensor zur thermischen Ankopplung an eine Wärmequelle an einem Randbereich des Substrats 1 mit der Wärmequelle thermisch kontaktiert. Zu diesem Zweck kann er beispielsweise mit einem ringförmigen Randbereich seiner der Oberfläche 2 entgegengesetzten Unterseite auf einen entsprechend geformten Wärmeleitflansch der Wärmequelle aufgesetzt werden. Insbesondere kann dieser ringförmige Randbereich zwischen dem radial äusseren Rand des zylinderscheibenförmigen Substrats 1 und einer in dessen Unterseite ausgebildeten flachzylindrischen Ausnehmung begrenzt sein, deren Radius etwas kleiner ist als der Radius des Substrats 1.

Die sich dadurch in Bezug auf die Zentren 4, 4' der Messpositionen 3, 3', 30, 31, 32, 33 einstellenden radialen Temperaturgradienten sind die Ursache für die Erzeugung der thermoelektrischen Spannungen zwischen den radial voneinander beabstandeten Thermokontakten 5, 8 und 9, 10. Diese Temperaturgradienten nehmen mit abnehmender Wärmeleitfähigkeit des Substrats 1 zu. Um eine hohe Empfindlichkeit des Sensors zu erreichen, werden daher Substrate 1 mit einer verhältnismässig kleinen Wärmeleitfähigkeit λ eingesetzt, insbesondere mit λ nicht grösser als 5 W/(m*K), vorzugsweise λ nicht grösser als 3 W/(m*K) oder gar nicht grösser als 2 W/(m*K). Hierfür geeignete Substrate 1 sind Keramiken mit besonderen Eigenschaften, beispielsweise aus dem unter dem Handelsnamen PYTHAGORAS erhältlichen Keramikwerkstoff, oder der unter dem Handelsnamen MACOR erhältlichen Glaskeramik mit einem λ um 1,5 W/(m*K).

### Verzeichnis der Bezugszeichen

- 1: Substrat
- 2: Oberfläche
- 3: Messposition
- 4, 4': Mittelpunkt, Zentrum
- 5, 5', 5'': erste Thermokontakte
- 6, 6', 6'': Thermoelementmaterial
- 7, 7': Thermoelementmaterial
- 8, 8': zweite Thermokontakte
- 9, 9', 9'': dritte Thermokontakte
- 10, 10': vierte Thermokontakte
- 11: azimutale Streifen
- 12, 12': Anschlussfleck
- 13: Zwischenbereiche
- 14, 15, 16: Teilmuster
- 17, 17', 17'': Durchkontaktierungsstelle
- 18: Isolierschicht
- 19, 19', 19": Durchkontaktierungslöcher
- 20: Oberfläche
- 21: Durchkontaktierungsstelle
- 22: Isolierschicht
- 23: Oberfläche
- 24: Isolierschicht
- 25: Oberfläche
- 26: Markierung
- 30, 31, 32, 33: Messpositionen
- 34: Isolierschicht
- 35: Fenster
- 36, 36': weitere Thermoelementanordnungen
- 37: Oberfläche
- 38, 38': erstes Thermoelementmaterial
- 39, 39': innerer Ringumfang
- 40, 40': Ausnehmungen
- 41, 41': Ausnehmungen
- 42, 42': Fortsetzung
- 43, 43': Anschlussfleck
- 44: Anschlussfleck
- 45: Verbindungsstück
- 46, 46': Arme

## Patentansprüche

1. Thermoanalytischer Sensor mit einem Substrat (1), durch das ein Wärmestrom zwischen einer an das Substrat (1) thermisch angekoppelten Wärmequelle und mindestens einer auf dem Sensor ausgebildeten Messposition (3, 3', 30, 31, 32, 33) leitbar ist, und mit einer auf einer im wesentlichen ebenen Oberfläche (2) des Substrats (1) ausgebildeten Thermoelementanordnung zur Lieferung eines thermoelektrischen Signals, die eine der Messposition (3, 3', 30, 31, 32, 33) zugeordnete Reihe von in einer Schaltungsanordnung miteinander verbundenen, jeweils aus zwei unterschiedlichen Thermoelementmaterialien (6, 7) zusammengesetzten Thermokontakten (5, 8, 9, 10) aufweist, **dadurch gekennzeichnet, dass** das Substrat (1) ein keramisches Substrat ist, dessen Wärmeleitfähigkeit nicht grösser als 5, bevorzugt unter 3, insbesondere unter 2 Watt pro Meter und Kelvin ist.

2. Thermoanalytischer Sensor nach Anspruch 1, **dadurch gekennzeichnet, dass** die Thermokontakte (5, 8, 9, 10) in mindestens zwei übereinander angeordneten und jeweils durch eine Isolierschicht (18, 22) voneinander getrennten Ebenen angeordnet sind, in denen sich jeweils zur Bildung von Abschnitten (14, 15, 16) der Schaltungsanordnung dienende Verbindungen der Thermokontakte (5, 8, 9, 10) erstrecken und entsprechende Enden der Abschnitte zur Bildung der Schaltungsanordnung durch Durchkontaktierung (19, 19', 19'') miteinander verbunden sind.

3. Thermoanalytischer Sensor nach einem der Ansprüche 1 oder 2, **dadurch gekennzeichnet, dass** in mindestens einem zwischen einem dem Zentrum (4, 4') radial nächstgelegenen ersten Thermokontakt (5) und zwei dazu in der Reihe unmittelbar benachbarten zweiten Thermokontakten (8) azimutal begrenzten Zwischenbereich (13) der Oberfläche (2) ein dritter Thermokontakt (9) und ein in der Reihe dazu unmittelbar benachbarter vierter Thermokontakt (10) vorgesehen sind.

4. Thermoanalytischer Sensor nach Anspruch 3, **dadurch gekennzeichnet, dass** die ersten Thermokontakte (5) auf einem das Zentrum (4, 4') als Mittelpunkt umgebenden ersten Kreis, die zweiten Thermokontakte (8) auf einem zu dem ersten Kreis konzentrischen zweiten Kreis, dessen Radius grösser ist als der Radius des ersten Kreises, die dritten Thermokontakte (9) auf einem zu dem ersten Kreis konzentrischen dritten Kreis, dessen Radius grösser als der Radius des ersten Kreises und kleiner als der Radius des zweiten Kreises ist, und die vierten Thermokontakte (10) auf einem zu dem ersten Kreis konzentrischen vierten Kreis, dessen Radius grösser als der Radius des dritten Kreises ist, liegen.

5. Thermoanalytischer Sensor nach einem der Ansprüche 1 bis 4, **dadurch gekennzeichnet, dass** auf der Oberfläche (2) des Substrats (1) mit den beiden Enden der Thermosäule verbundene Anschlüsse (12, 12'), an denen das von der Thermosäule gelieferte thermoelektrische Signal abgreifbar ist, ausgebildet sind.

6. Thermoanalytischer Sensor nach einem der Ansprüche 1 bis 5, **dadurch gekennzeichnet, dass** auf dem Sensor mehr als eine der Messpositionen (3, 3'), vorzugsweise zwei oder vier Messpositionen (3, 3', 30, 31, 32, 33), ausgebildet sind.

7. Thermoanalytischer Sensor nach einem der Ansprüche 1 bis 6, **dadurch gekennzeichnet, dass** auf der Oberfläche (2) des Substrats (1) an der Messposition (3, 3') eine weitere Thermoelementanordnung (36, 36') zur Lieferung eines einer Absoluttemperatur an der Messposition entsprechenden thermoelektrischen Signals sowie Anschlüsse (43, 43', 44), an denen das der Absoluttemperatur entsprechende thermoelektrische Signal abgreifbar ist, ausgebildet sind.

8. Thermoanalytischer Sensor nach einem der Ansprüche 1 bis 7, **dadurch gekennzeichnet, dass** die auf dem Substrat (1) ausgebildeten Thermoelementanordnungen als Dickfilme ausgebildet sind.

9. Thermoanalytischer Sensor nach einem der Ansprüche 1 bis 8, **dadurch gekennzeichnet, dass** das Substrat (1) ein keramisches Material und insbesondere eine Glaskeramik ist.

10. Verfahren zur Herstellung eines thermoanalytischen Sensors, insbesondere nach einem der Ansprüche 1 bis 9, bei dem auf einer im wesentlichen ebenen Oberfläche (2) eines Substrats (1) in Dickschichttechnik ein Muster aus zwei unterschiedlichen Thermoelementmaterialpasten (6, 7) aufgedruckt wird, welches einer zur Lieferung eines thermoelektrischen Signals dienenden Thermoelementanordnung mit einer mindestens einer Messposition (3, 3', 30, 31, 32, 33) zugeordneten Reihe von in einer Schaltungsanordnung miteinander verbundenen, aus den zwei unterschiedlichen Thermoelementmaterialien (6, 7) zusammengesetzten Thermokontakten (5, 8, 9, 10) entspricht, und das aufgedruckte Muster aufgebrannt wird, **dadurch gekennzeichnet, dass** das Muster in mindestens zwei Teilmuster (14, 15, 16) zerlegt, auf dem Substrat (1) eines der Teilmuster (14, 15, 16) in Dickschichttechnik hergestellt, darüber eine Isolierschicht (18, 22) mit dem Zusammenhang der Teilmuster entsprechenden Durchkontaktierungslöchern (19, 19') aufgebracht, darauf ein weiteres der Teilmuster (14, 15, 16) in Dickschichttechnik hergestellt und dieser Vorgang so lange durchgeführt wird, bis alle Teilmuster (14, 15, 16) übereinander hergestellt sind.

11. Verfahren nach Anspruch 10, **dadurch gekennzeichnet, dass** die Teilmuster (14, 15, 16) im Wesentlichen deckungsgleich gestaltet werden.

12. Verfahren nach Anspruch 10 oder 11, **dadurch gekennzeichnet, dass** die Teilmuster (14, 15, 16) so gestaltet werden, dass sie jeweils durch eine einzige Verbindung (17, 17', 17'') miteinander zusammenhängen.

13. Verfahren nach einem der Ansprüche 10 bis 12, **dadurch gekennzeichnet, dass** auf dem in Bezug auf das Substrat (1) obersten Teilmuster (16) eine Isolierschicht (24) mit Anschlüssen, an denen das thermoelektrische Signal abgreifbar ist, hergestellt wird, von denen mindestens einer zu dem in Bezug auf das Substrat (1) untersten Teilmuster (14) durchkontaktiert wird.
